# EUROPÄISCHE PATENTSCHRIFT

(11) **EP 0 351 678 B1**
(45) Veröffentlichungstag und Bekanntmachung des Hinweises auf die Patenterteilung: **15.12.1993**
(21) Anmeldenummer: 89112535.3
(22) Anmeldetag: 08.07.1989
(51) Int. Cl.: F16F 9/05

(54) **Tauchkolbenanordnung**
Piston arrangement
Dispositif à piston

(30) Priorität: 20.07.1988 DE 3824542
(43) Veröffentlichungstag der Anmeldung: 24.01.1990
(73) Patentinhaber: Otto Sauer Achsenfabrik Keilberg, 63856 Bessenbach (DE)
(72) Erfinder: Koschinat, Hubert B. c/o KEIL & SCHAAFHAUSEN, D-6000 Frankfurt am Main 1 (DE); Fröhlke, Manfred, Dr. c/o KEIL & SCHAAFHAUSEN, D-6000 Frankfurt am Main 1 (DE)
(74) Vertreter: Keil, Rainer A., Dipl.-Phys. Dr.

(56) Entgegenhaltungen:
- EP-A- 0 296 445
- GB-A- 964 138
- GB-A- 1 231 766
- GB-A- 1 248 025
- US-A- 4 787 606

## Beschreibung

Die Erfindung bezieht sich auf eine Tauchkolbenanordnung z.B. für die Abstützung und Führung eines Luftfederbalges einer luftgefederten Nutzfahrzeugachse od. dgl., mit einem Tauchkolben, welcher einen Tauchkolbenmantel mit einem unteren Fußbereich z.B. für die Verbindung mit einem Luftfedertragarm und einen oberen, sich an den Tauchkolbenmantel anschließenden Tauchkolbenrand aufweist, welcher nach radial innen in einen mit einem, mit einer Öffnung für den Durchtritt eines Bolzens zur kraftschlüssigen Verbindung mit einem Boden des Luftfederbalges versehenen Muldenboden ausgestatteten Muldenabschnitt übergeht, welcher eine Mulde zur Aufnahme des konvexen Bodens des Luftfederbalges bildet, wobei in einem von dem Tauchkolbenmantel umgebenen Innenraum ein Stützkörper angeordnet ist, welcher sich mit seinem unteren Fußbereich an dem unteren Fußbereich des Tauchkolbens abstützt.

Nutzfahrzeuge werden in zunehmendem Maße mit Luftfedersystemen ausgerüstet, um den Federungskomfort zu erhöhen, Vorteile der Höhenverstellung und -regelung zu nutzen, bei Mehrachsaggregaten mittels Ausgleichsleitungen Achslasten optimal zu verteilen und Fahrbahnbeläge zu schonen. Luftgefederte Achsen innerhalb eines mehrachsigen Verbundes lassen sich mittels zusätzlicher Vorrichtungen zwecks Schonung der Reifen auf einfache Weise liften.

Luftfedern können nur Vertikalkräfte übertragen. Für die Aufnahme aller übrigen Kräfte und Momente sind andere Fahrwerkselemente zusätzlich erforderlich. Die bekannten Luftfederungen bestehen im wesentlichen aus einem Luftfederbalg, häufig mit integriertem Gummipuffer als Anschlag, einem Tauchkolben und einem Tragarm, der seinerseits auf bzw. unter der Fahrzeugachse montiert ist. Der Luftfederbalg ist ein mit Luft füllbarer rotationssymmetrischer Gummisack, welcher über eine oben befestigte Stahlplatte als Krafteinleitungselement mit dem Fahrzeugrahmen verbunden ist. An seiner Unterseite ist ein rondenförmiger Boden aus Stahl anvulkanisiert oder verklemmt, welcher zum Inneren des Luftfederbalges hin den Gummipuffer tragen kann. Die konvex ausgebildete Unterseite des Bodens liegt formschlüssig in einer entsprechend konkav geformten oberen Mulde des Tauchkolbens und ist mit diesem fest verschraubt.

Der Tauchkolben ist in der bisher üblichen Stahlausführung ein rotationssymmetrisches Tiefzieh- bzw. Fließpreßteil, dessen Oberflächen mit Korrosionsschutz versehen ist. Sein im wesentlichen zylindrischer Mantel ist im unteren Fußbereich leicht konisch nach außen ausgeformt und anschließend halbkreisförmig nach innen umgebördelt. Bohrungen im Bördelrand vermitteln die Verbindung zum plattenförmig ausgebildeten Ende des Luftfedertragarmes. Im oberen Abschnitt geht der Tauchkolbenmantel über einen im wesentlichen halbkreisförmigen Rand in eine kegelstumpfförmige Mulde mit ebenem Boden über, die zur Aufnahme des konvexen Bodens des Luftfederbalges dient. Der Muldenboden ist mit mindestens einer Bohrung versehen, durch welche je ein Schraubenbolzen zur kraftschlüssigen Verbindung des Tauchkolbens mit dem Luftfederbalg geführt werden kann. Beim Einfedern liegt der Boden des luftgefüllten Federbalges formschlüssig in der Tauchkolbenmulde, während sich die Seitenwand des im wesentlichen zylinderförmigen Luftfederbalges über den oberen Rand des Tauchkolbens und den im wesentlichen zylinderförmigen Tauchkolbenmantel stülpt. Dabei kann der Tauchkolben so tief in den Luftfederbalg eintauchen, daß der im Luftfederbalg angeordnete Gummipuffer zwischen der oberen Stahlplatte und dem Tauchkolben des Luftfederbalges eingeklemmt wird und somit den Endenschlag bildet. In solchen Fällen wirken erhebliche Stoßbelastungen unmittelbar auf die Fläche des Muldenbodens ein.

Derartige Tauchkolben sind wegen ihrer metallenen Ausführung verhältnismäßig schwer und teuer. Außerdem können Metalltauchkolben nach längerem Gebrauch und Abnutzung des Korrosionsschutzes im Abrollbereich korrodieren, was zu einem erhöhten Verschleiß des Gummisackes führt. Deswegen hat man versucht, Tauchkolben aus glasfaserverstärktem Kunststoff zu entwickeln, um dadurch das Gewicht und die Fertigungskosten zu senken, sowie die Lebensdauer des gesamten Luftfederbalges, bedingt durch die glatte und korrosionsfreie Oberfläche des Tauchkolbens, zu erhöhen. Dabei gleicht die äußere Kontur des Tauchkolbens derjenigen der Ausführungsform aus Stahl. Ihre fußseitige Kante ist jedoch nicht umgebördelt, sondern im Schnitt etwa trapezförmig ausgeführt, um eine bessere Auflage auf der Tragarmplatte zu gewährleisten. Senkrecht zu der fußseitigen Kante verlaufen zumeist vier im Winkel von 90° zueinander versetzte Rippen entlang der inneren Mantelfläche bis zum oberen Rand des Tauchkolbens. In ihrem unteren Abschnitt enthalten die Verstärkungsrippen Gewindebohrungen oder eingelassene Gewindeeinsätze aus Metall, welche der Verschraubung mit der Tragarmplatte dienen.

Bei einer anderen Ausführung eines Tauchkolbens aus glasfaserverstärktem Kunststoff ist vorgeschlagen worden, innen im Bereich des oberen abgerundeten Übergangs von dem Tauchkolbenmantel zur kegelstumpfförmigen Mulde eine Vielzahl von Verstärkungsrippen vorzusehen. Bei stoßartigen Belastungen treten aber beim oberen Anschlag dennoch Brüche am Übergang von dem Tauchkolbenmantel zur kegelstumpfförmigen Mulde auf. Andererseits wurden auch Ausreißungen des Muldenbodens beim völligen Ausfedern beobachtet, da dabei die wirksame Zugkraft über den Schraubenkopf und ggf. eine Unterlegscheibe vom Luftfederbalg direkt auf den Muldenboden des Tauchkolbens übertragen wird. Außer diesen funktionellen Nachteilen erreicht diese Tauchkolbenausführung aufgrund der zahlreichen Verrippungen annähernd das Gewicht eines Tauchkolbens aus Stahl. Ferner sind die Kosten für Werkzeuge zur Herstellung derartiger Tauchkolbenausführungen sehr hoch.

Bei einer noch anderen Ausführung eines Tauchkolbens aus glasfaserverstärktem Kunststoff ist im Kolbeninneren vom Muldenboden aus konzentrisch ein Rohrstutzen angeformt, welcher bis auf die Tragarmplatte hinabreicht und sich bei Belastung auf diese abstützt. Aufgabe dieses Rohrstutzens war die Übertragung von Stößen vom Muldenboden auf die Tragarmplatte und die Entlastung des Randbereichs des Tauchkolbens. Der Nachteil dieser Ausführung liegt jedoch darin, daß bei dem angewendeten Herstellungsverfahren die verstärkenden Glasfasern nicht in das untere Drittel des Rohrstutzens gelangen, so daß der Rohrstutzen bei höherer Stoßbelastung bricht. Die Dimensionierung des Rohrstutzens behindert zudem eine unter Umständen notwendige Montage der Tragarmplatte auf einem Parabellenker, falls dieser aus konstruktiven Gründen anstelle des Tragarmes erforderlich ist. Man hat deshalb nachträglich einen Bereich am unteren Rand des Rohrstutzens ausgeklinkt, wodurch allerdings die Stützwirkung wieder gemindert wird.

Aus der GB-PS 1 231 766 ist eine gedämpfte pneumatische Feder mit einer Haupt- und einer Hilfskammer bekannt, welche über eine Öffnung in ihrer Unterteilungswand miteinander verbunden sind. Die Hauptkammer wird von einem Luftfederbalg gebildet, dessen Boden mit der Bodenplatte des die zweite bis auf die Verbindung mit der ersten Kammer geschlossene Kammer bildenden Tauchkolbens verbunden ist. Die obere Bodenplatte des Tauchkolbens ist über ein rohrförmiges Glied mit der unteren Abdeckplatte verschweißt. Die Tauchkolbenwandung wird teilweise von einem sich an die obere Bodenplatte anschließenden, stark gekrümmten Wandungsbereich und teilweise von einem von der unteren Abdeckplatte schräg aufwärts ragenden Flanschbereich gebildet. Der Tauchkolben und das rohrförmige Element müßten, wenn diese Tauchkolbenanordnung für die Abstützung und Führung eines Luftfederbalges einer luftgefederten Nutzfahrzeugachse oder dgl. eingesetzt würde, mit außerordentlich starken Wandungen versehen sein, um den auftretenden Beanspruchungen gerecht zu werden. Wegen ihres Aufbaus ist diese bekannte Tauchkolbenanordnung daher schwer an Gewicht und aufwendig in der Herstellung.

Hiervon ausgehend ist es Aufgabe der vorliegenden Erfindung, eine Tauchkolbenanordnung der eingangs genannten Art aus glasfaserverstärktem Kunststoff od. dgl. Verbundmaterial zu entwickeln, welche sämtliche wirksamen Druck- und Zugkräfte, die beim Ein- und Ausfedern von luftgefederten Nutzfahrzeugachsen auch in Extremfällen auftreten, ohne Beschädigung aufnimmt, ein einwandfreies Gleiten des Luftfederbalges beim Beschreiben des Federweges gewährleistet, ohne daß der Federbalg eingeklemmt wird, auch eine Montage auf einem Parabellenker gestattet und auf kostengünstige Weise herstellbar ist.

Diese Aufgabe wird mit der Erfindung im wesentlichen dadurch gelöst, daß der Tauchkolben und der Stützkörper aus Kunststoff, vorzugsweise glasfaserverstärktem Kunststoff o.dgl. Verbundwerkstoffen, bestehen, daß der Tauchkolben topfförmig mit im wesentlichen zylindrischem Mantel ausgebildet ist, daß der Stützkörper als gesondertes Teil von im wesentlichen hohlkegelstumpfförmiger Gestalt mit sich vom unteren Fußbereich zum Muldenboden des Tauchkolben verringerndem Durchmesser ausgebildet ist und daß der Stützkörper mit einer oberen Bodenplatte an der Unterseite des Muldenbodens des Tauchkolbens anliegt.

Auf diese Weise wird der bisherige konstuktiv aufwendige einteilige Tauchkolben durch eine zweiteilige Ausführung ersetzt, dessen beide Teile spezifische Aufgaben übernehmen dergestalt, daß der äußere Tauchkolben im wesentlichen die übliche Führung des Luftfederbalges beim Ein- und Ausfedern übernimmt, während ein gemeinsam mit dem äußeren Tauchkolben an die untere konvexe Luftfederbalgplatte geschraubter kegelstumpfförmiger Stützkörper seinerseits im wesentlichen die Druck- und Zugkräfte übernimmt, die insbesondere beim oberen Anschlag oder beim vollständigen Ausfedern schädigend wirksam werden können. Dadurch daß die obere Bodenplatte des Stützkörpers an der Unterseite der Tauchkolbenbodenplatte anschließt, weisen beide Platten aufgrund ihrer sandwichartigen Konfiguration gegenüber Zugbeanspruchung durch plötzliches vollständiges Ausfedern ausreichende Festigkeit auf. Der äußere untere Rand des im Innenraum des Tauchkolbens positionierten Stützkörpers liegt dabei im Fußbereich des Tauchkolbenmantels an, um eine radiale und axiale Abstützung zur Stabilisierung in diesem Randbereich zu bieten. Trotz ihrer einfachen rotationssymmetrischen Gestalt und die im Vergleich zu vorbekannten Ausführungen sehr leichte Bauweise aus Kunststoff erweist die erfindungsgemäße Lösung gegenüber diesen eine weitaus höhere Betriebsfestigkeit auf. Die Abstützfunktion ist insbesondere dadurch besonders gut, weil sich der Stützkörper mit seinem unteren Fußbereich nach oben bzw. außen an dem unteren Fußbereich des Tauchkolbens abstützt. Eine wirksame Materialersparnis und dennoch wirksame Aufnahme von Druck- und Zugkräften wird insbesondere dadurch erzielt, daß der Stützkörper im wesentlichen hohlkegelstumpfförmige Gestalt hat mit sich vom unteren Fußbereich zum Muldenboden des Tauchkolbens veringerndem Durchmesser.

Vorzugsweise ist auch der Stützkörper im wesentlichen rotationssymmetrisch ausgebildet und koaxial zu dem Tauchkolben angeordnet, so daß die Aufnahme der Kräfte gleichmäßig über den Umfang verteilt erfolgt.

Bei einer besonderen Ausgestaltung der Erfindung ist ferner vorgesehen, daß der Tauchkolben über den Umfang des Tauchkolbenmantels verteilte, nach radial innen weisende Verstärkungsrippen aufweist, in welchen stirnseitig Vertiefungen zur Aufnahme von Bolzen für die Verbindung mit dem Luftfederträger vorgesehen sind, und daß der Stützkörper in seinem Fußbereich formschlüssig an dem Fußbereich der Verstärkungsrippen anschließt.

Gemäß einem weiteren Erfindungsmerkmal ist der Stützkörper mit einer an seinem unteren Fußbereich vorgesehenen, vorzugsweise umlaufenden Rastrippe zumindest in mehreren über den Umfang des Fußbereichs des Tauchkolbenmantels verteilten Rastaussparungen nach Art eines Schnappverschlusses einrastbar. So bilden die gesonderten Bauteile Tauchkolben und Stützkörper eine bauliche und funktionsmäßige Einheit.

Die Rastaussparungen können vorzugsweise im Fußbereich der Verstärkungsrippen vorgesehen sein.

Das Einrasten wird bei einfacher Montage beispielsweise dadurch erreicht, daß die Rastaussparungen von unten aus gesehen, also von der Seite aus, von welcher der Stützkörper in den Innenraum des Kolbens eingeführt wird, hinterschnitten sind.

Ferner können die Rastaussparungen eine Einführungsschräge aufweisen, um die Montage zu erleichtern.

Desweiteren dient es einer sicheren Abstützung des Stützkörpers an dem Tauchkolben, wenn die Rastaussparungen eine obere Anschlagkante für die vorzugsweise umlaufende Rastrippe des Stützkörpers bilden.

Für die gemeinsame Montage von Stützkörper und Tauchkolben kann die Bodenplatte des Stützkörpers der Einfachheit halber koaxial zur Öffnung im Muldenboden des Tauchkolbens für den Durchtritt des Bolzens zur gemeinsamen kraftschlüssigen Verbindung mit dem Boden des Luftfederbalges eine Öffnung aufweisen.

Ein weiteres Erfindungsmerkmal besteht darin, daß die Bodenplatte des Stützkörpers eine mittlere, ggf. mit Radialrippen und umlaufendem Steg ausgebildete Verstärkung aufweist. Hierdurch wird eine bessere Aufnahme der Zugkräfte, welche beim Ausfedern auf die Tauchkolbenanordnung über die beschriebene Mittenverschraubung zwischen Luftfederbalg und Tauchkolben bzw. Stützkörper auf die Bodenplatte des Tauchkolbens bzw. die Bodenplatte des Stützkörpers einwirken, erreicht.

Gute Kraftübertragungsverhältnisse erhält man dann, wenn sich die Oberseite der Bodenplatte mit einem ihre Öffnung umgebenden Ringbereich an der jedenfalls in diesem Ringbereich ebenen Unterseite des Muldenbodens des Tauchkolbens abstützt.

Von besonderem Vorteil ist es ferner, wenn zwischen der Unterseite des Muldenbodens und Oberseite der Bodenplatte eine die Öffnung umgebender flacher Hohlraum freigelassen ist, in dessen Bereich die Bodenplatte unter der Wirkung des Bolzens einfedernd ausgebildet ist. Dies kann bspw. dadurch verwirklicht sein, daß die Bodenplatte des Stützkörpers gegenüber dem im wesentlichen ebenen Muldenboden des Tauchkolbens nach unten leicht ausgewölbt ist. Werden Tauchkolben und Stützkörper mittels eines durch die an dieser Stelle vorgesehenen Öffnungen hindurchgeführten Bolzens miteinander und bspw. einem Gummipuffer verbunden, so kann die Bodenplatte leicht einfedern. Wenn der Bolzen bis auf Anschlag festgeschraubt ist, bleibt die Bodenplatte im Bereich des Hohlraumes jedoch federnd. Die Teile sind dadurch zwar verspannt, der Luftfederbalg mit dem Lochbild für die Befestigung in der oberen Stahlplatte und dem Luftanschluß läßt sich jedoch nachwievor gegenüber dem Tauchkolben radial verdrehen. Hierdurch wird eine große Konstruktions- und Montageerleichterung gegeben, weil dadurch eine einfache Anpassung an die spezifischen Gegebenheiten des betreffenden Fahrzeuges erfolgen kann, ohne daß ein Lösen und wieder Festziehen der Teile notwendig ist.

Eine weitere Erhöhung der Sicherheit gegen Ausreißen der Bodenplatte des Stützkörpers bei Zug wird dann erreicht, wenn die Unterseite der Bodenplatte des Stützkörpers über einen Bogen mit weitem Radius in die Innenfläche des konisch verlaufenden Stützkörpermantels übergeht.

Die ringförmige Querschnittsfläche des Stützkörpermantels ist in jeder Höhe des kegelstumpfförmigen Stützkörpers vorzugsweise gleich, so daß bei geringem Materialaufwand die größtmögliche Übertragung von Druck- und Zugkräften erfolgen kann.

Dies kann im wesentlichen dadurch bewerkstelligt werden, daß die Innenfläche des Stützkörpermantels stärker gegenüber der Senkrechten geneigt ist als die Außenfläche des Stützkörpermantels.

Mit der Erfindung wird ferner vorgeschlagen, daß der Tauchkolbenmantel aus fertigungstechnischen Gründen über einen wesentlichen Abschnitt seiner Länge mit geringer Neigung gegenüber der Senkrechten verläuft und sich in seinem unteren Fußbereich nach außen hin in einem Bogen mit weitem Radius kegelförmig aufweitet. Durch die Aufweitung des Tauchkolbens im unteren Bereich vergrößert sich die wirksame Fläche des Luftfederbalges, wenn der Tauchkolben entsprechend weit eintaucht. Hierdurch wird ein harter Anschlag (etwa bei völligem Durchfedern) gegen den Gummipuffer vermieden.

Zusätzlich zu den Verstärkungsrippen kann der Tauchkolben nach radial innen weisende Versteifungsrippen aufweisen, welche vorzugsweise über die gesamte Höhe des Tauchkolbenmantels reichen und vorzugsweise mit ihrer Innenkontur an die Kontur der Außenfläche des Stützkörpermantels angepaßt sind. Hierdurch kann nicht nur eine zusätzliche Erhöhung des Widerstandsmoments des Tauchkolbenmantels erzielt, sondern auch noch dessen Abstützung auf dem Stützkörper erreicht werden. Dabei können die Versteifungsrippen als Fortsetzung der Verstärkungsrippen oder zwischen den Verstärkungsrippen, vorzugsweise symmetrisch, über den Umfang verteilt angeordnet sein. Wenn sie praktisch über die gesamte Höhe des Tauchkolbenmantels reichen, füllen die Versteifungsrippen im Bereich ihrer Breite auch den Innenraum zwischen Tauchkolbenmantel und Muldenabschnitt bis zum Muldenboden aus, so daß auch noch der obere abgerundete Tauchkolbenrand entlastet wird. Selbstverständlich ist es auch möglich, daß der Stützkörper statt dessen oder zusätzlich entsprechende radial nach außen weisende Versteifungsrippen hat, welche bis zum Tauchkolbenmantel reichen können.

In weiterer Ausgestaltung des Erfindungsgedankens kann der Stützkörper über den Umfang des Stützkörpermantels verteilte, nach radial außen vorstehende Verstärkungsrippen aufweisen, in welchen stirnseitige Vertiefungen zur Aufnahme von Bolzen für die Verbindung mit dem Luftfederträger vorgesehen sind und wobei der Tauchkolben mit seinem Fußbereich formschlüssig an den Fußbereich der Verstärkungsrippen anschließt. Die Versteifungsrippen brauchen nicht über die gesamte Höhe des Stützkörpers zu reichen, so daß insbesondere bei verhältnismäßig großen Tauchkolben eine weitere wirksame Materialersparnis erzielt werden kann.

Als weitere Alternative kann ferner vorgesehen sein, daß die Bodenplatte des Stützkörpers konkav ausgebildet ist und sich mit einem mittleren, ihre Öffnung unmittelbar umgebenden ebenen Ringbereich an der Unterseite des Muldenbodens des Tauchkolbens abstützt. Hierdurch wird insbesondere bei großen Tauchkolben ein günstiger Kraftflußverlauf bei Zugbeanspruchung der Tauchkolbenanordnung erzielt.

Weitere Ziele, Merkmale, Vorteile und Anwendungsmöglichkeiten der vorliegenden Erfindung ergeben sich aus der nachfolgenden Beschreibung von Ausführungsbeispielen anhand der Zeichnung. Dabei bilden alle beschriebenen und/oder bildlich dargestellten Merkmale für sich oder in beliebiger sinnvoller Kombination den Gegenstand der vorliegenden Erfindung auch unabhängig von ihrer Zusammenfassung in den Ansprüchen oder deren Rückbeziehung.

Es zeigen:
- Fig. 1: im Vertikalschnitt einen vollständigen Luftfederbalg mit einem als tiefgezogenen Blechkörper ausgebildeten Tauchkolben nach dem Stand der Technik,
- Fig. 2a: abschnittsweise aus der Richtung A von Fig. 2b gesehen eine die Erfindung aufweisende Tauchkolbenanordnung
- Fig. 2b: einen vertikalen Schnitt entlang der Schnittlinie B-B von Fig. 2a,
- Fig. 2c: eine Detailvergrößerung gemäß Ausschnitt C von Fig. 2b, und
- Fig. 3a bis 4b: Darstellungen entsprechend Fig. 2a und 2b für zwei weitere Ausgestaltungen der Erfindung.

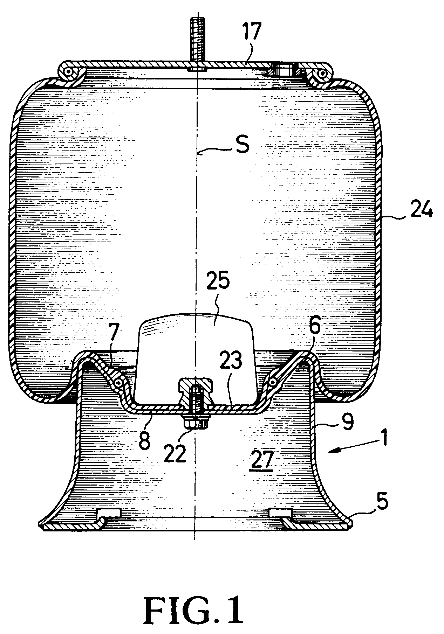

Die Luftfeder gemäß Fig. 1 weist einen als mit Luft befüllbarer, rotationssymmetrischer Gummisack ausgebildeten Luftfederbalg 24 auf, welcher über eine obere eingerändelte Stahlplatte 17 als Krafteinleitungselement mit einem (nicht dargestellten) Fahrzeugrahmen zu verbinden ist. An der Unterseite des Luftfederbalges 24 ist ein konvexer rondenförmiger Boden 23 aus Stahl anvulkanisiert, welcher zum Inneren des Luftfederbalges 24 hin einen Gummipuffer 25 als Anschlag trägt. Der Boden 23 ist auf seiner Unterseite konvex ausgebildet und liegt formschlüssig in einem entsprechend konkav geformten oberen Muldenboden eines Tauchkolbens 1 und ist mit diesem mittels eines Bolzens 22 kraftschlüssig verschraubt. Der Tauchkolben 1 ist ein topfförmiges rotationssymmetrisches Tiefziehteil aus Stahl. Der im wesentlichen zylindrische Tauchkolbenmantel 9 ist im unteren Fußbereich 5 leicht konisch nach außen ausgeformt und anschließend halbkreisförmig nach innen umgebördelt. Bohrungen im Bördelrand vermitteln eine Verbindung zum plattenförmig ausgebildeten Ende eines (nicht dargestellten) Luftfedertragarms.

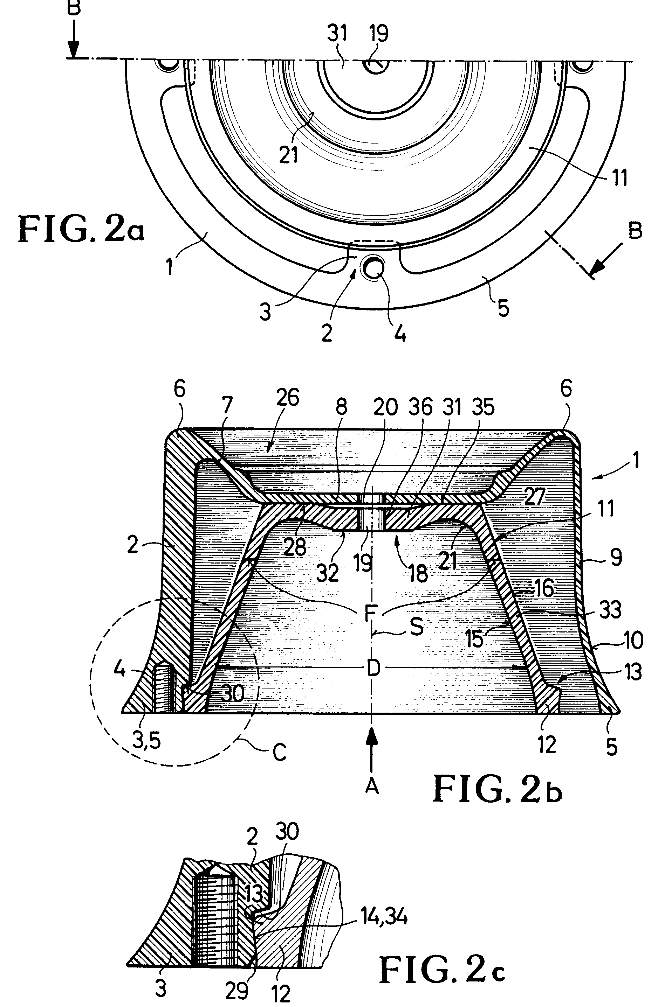

Die in den Fig. 2a bis 2c veranschaulichte erfindungsgemäße Tauchkolbenanordnung ist für die Verwendung mit einer im wesentlichen gleich ausgebildeten Luftfederbalg-Anordnung 17, 23, 24, 25 bestimmt. Der äußere etwa topfförmig ausgebildete Tauchkolben 1 weist vier um 90° versetzt angeordnete nach radial innen vorspringende und sich über die gesamte Höhe des Tauchkolbenmantels 9 erstreckende Verstärkungsrippen 2 auf. Im Fußbereich 3 der Verstärkungsrippen 2 sind Vertiefungen 4 für die Aufnahme von (nicht dargestellten) Gewindebolzen zur Verbindung mit der (nicht dargestellten) Tragarmplatte vorgesehen. Der im wesentlichen zylindrische Tauchkolbenmantel 9 geht oben in einen abgerundeten, im Schnitt im wesentlichen halbkreisförmigen Tauchkolbenrand 6 über, an welchen sich schräg nach radial innen ein im wesentlichen kegelstumpfförmiger Muldenabschnitt 7 mit im wesentlichen ebenen Muldenboden 8 zur Bildung einer im wesentlichen kegelstumpfförmigen Mulde 27 anschließt, in welcher der kovexe Boden 23 formschlüssig aufgenommen werden kann. Der Tauchkolbenmantel 9 hat eine geringe Neigung (z.B. ∼ 1°) gegenüber der Senkrechten S und weitet sich in seinem unteren Fußbereich 5 kegelförmig nach außen in einem Bogen 10 von weitem Radius (z.B. ∼ 100 mm) auf.

Im Inneren des Tauchkolbens 1 ist ein als besonders hohlkegelstumpfförmiges Teil ausgebildeter Stützkörper 11 positioniert. Dessen ringförmiger Fußbereich 12 ist an seiner Außenseite mit einer z.B. umlaufenden Rastrippe 13 versehen, welche in entsprechende Rastaussparungen 14 auf der Innenseite der Fußbereiche 3 der vier Verstärkungsrippen 2 einrasten kann. Zu diesem Zweck haben die Rastaussparungen 14 von unten gesehen zunächst eine Einführungsschräge 29, welche in eine leichte Hinterschneidung 34 übergeht, an welche sich ihrerseits nach oben eine Anschlagkante 30 für die Oberseite der Rastrippe 13 anschließt. Durch diese Rast- oder Schnappverbindung 13, 14 können die beiden Teile, Tauchkolben 1 und Stützkörper 11, fest aber lösbar formschlüssig miteinander verbunden werden und sich in den Fußbereichen 3, 12 nach außen und nach oben aneinander abstützen.

Die Neigung der Innenfläche 15 des Stützkörpermantels 33 ist gegenüber der Neigung seiner Außenfläche 16 um soviel größer, daß in jeder Höhe des kegelstumpfförmigen Stützkörpers 11 die ringförmige Querschnittsfläche F des Stützkörpers 11 gleichbleibt.

Die obere Bodenplatte 18, in welcher der Stützkörpermantel 33 übergeht, liegt mit ihrer in einem Ringbereich ebenen Oberseite 35 fest an einen gleichfalls ebenen Ringbereich der Unterseite 28 des Muldenbodens 8 des Tauchkolbens 1 an. Die Bodenplatte 18 hat eine zur Öffnung 20 des Muldenbodens 8 koaxiale Öffnung 19, durch welchen der hier nicht dargestellte Bolzen 22 zur gemeinsamen Verbindung der beiden Teile 1, 11 der zweiteiligen Tauchkolbenanordnung mit dem Boden 23 des Luftfederbalges 24 hindurchgeführt werden kann. Die Bodenplatte 18 ist in der Umgebung der Öffnung 19 konkav federnd ausgebildet, so daß ein flacher Hohlraum 36 zum Muldenboden 8 hin freibleibt, welcher sich beim Festziehen des Bolzens 22 in dem Gummipuffer 25 bis zum Grund etwas verringert. Durch die ebene ringförmige Auflage zwischen äußerem Tauchkolben 1 und dem in dessen Innenraum 27 angeordneten Stützkörper 11 bilden die von dem Muldenabschnitt 7 umgebene Mulde 26 im oberen Bereich des äußeren Tauchkolbens 1 und der Stützkörper 11 eine Art Doppelkegel.

Zur besseren Aufnahme von Zugkräften, welche beim Ausfedern auf die Tauchkolbenanordnung über die beschriebene Mittenverschraubung zwischen Luftfederbalg 24 und Tauchkolben 1 bzw. Stützkorper 11 auf den Muldenboden 8 bzw. die Bodenplatte 18 einwirken, hat letztere im mittleren Bereich eine Verstärkung 31. Die Unterseite 32 der Bodenplatte 18 geht in einem Bogen 29 mit verhältnismäßig weitem Radius in die Innenfläche 15 des kegelstumpfförmig verlaufenden Stützkörpermantels 33 über. Dadurch wird ein Höchstmaß an Sicherheit gegen Ausreißen der Bodenplatte 18 bei Zug gewährleistet.

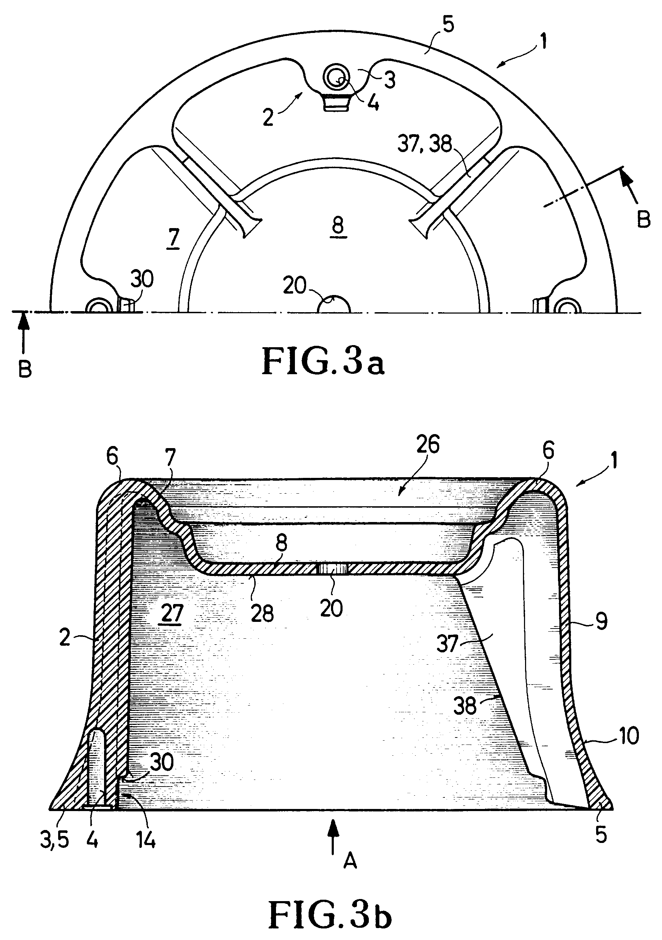

In den Fig. 3a und 3b ist eine andere Ausführungsform eines Tauchkolbens 1, in diesem Falle ohne den Stützkörper, aus Richtung A von Fig. 3b bzw. im Schnitt B-B von Fig. 3a veranschaulicht. In diesem Falle hat der Tauchkolben 1 symmetrisch zu den Verstärkungsrippen 2 über den Umfang verteilt zusätzliche nach radial innen weisende Versteifungsrippen 37, welche jeweils über ihre Breit des gesamten Zwischenraum zwischen dem Tauchkolbenmantel 9 und dem Muldenabschnitt 7 ausfüllen und zu einer Erhöhung des Widerstandsmoments des Tauchkolbens 1 führen. Mit ihrer Innenkontur 38 sind die Versteifungsrippen 37 ferner an die Kontur der Außenfläche 16 des Stützkörpermantels 33 angepaßt, so daß sich der Tauchkolben 1 über die Versteifungsrippen 37 auf dem Außenumfang des Stützkörpers 11 abstützen kann. Die Vertiefungen 4 sind in diesem Falle nicht mit Gewinde versehen, wie bei der Ausführungsform gemäß Fig. 2 a-c. In diesem Falle werden selbstschneidende Schrauben für die Verbindung mit der Tragarmplatte verwendet.

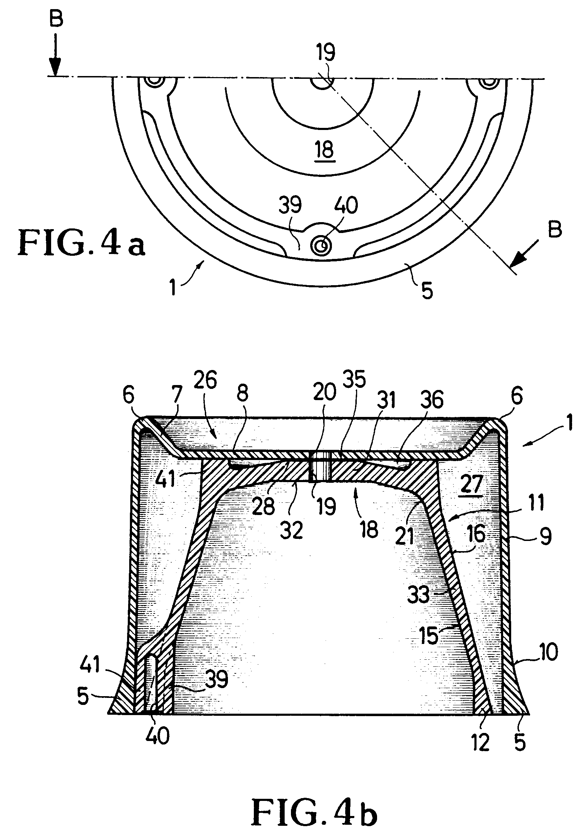

Bei der in den Fig. 4a und 4b dargestellten Ausgestaltung der erfindungsgemäßen Tauchkolbenanordnung hat anstelle des Tauchkolbens 1 der Stützkörper 11 über den Umfang des Stützkörpermantels 33 verteilte, nach radial außen vorstehende Verstärkungsrippen 39, in welchen stirnseitige Vertiefungen 40 zur Aufnahme von Bolzen für die Verbindung mit dem Luftfederträger vorgesehen sind. Der Tauchkolben 1 schließt außen mit seinem Fußbereich 5 formschlüssig an den Fußbereich 41 der Verstärkungsrippen an. Die Anlage wird durch den von dem Luftfederbalg 24 bei dessen Überollen ausgeübten Außendruck unterstützt. Tauchkolben 1 und Stützkörper 11 sind lediglich im Bereich des Muldenbodens 8 und der Bodenplatte 18 bei der Montage an dem Boden 23 des Luftfederbalgs 24 miteinander lösbar verbunden. Die Bodenplatte 18 des Stützkörpers 11 ist in diesem Falle leicht konkav ausgebildet, so daß sie sich mit einem mittleren, ihre Öffnung 19 unmittelbar umgebenden Ringbereich an der Unterseite 28 des Muldenbodens 8 des Tauchkolbens 1 abstützt. Der Stützkörpermantel 33 ist über die Bodenplatte 18 hinaus zur Bildung eines Stützringes 41 verlängert und verbreitert. Der Stützring 41 liegt mit seiner Stirnfläche in einem äußeren Ringbereich an der Unterseite 28 des Muldenbodens 8 an. Es ist selbstverständlich auch hier möglich, daß der Tauchkolbenmantel 9 entsprechend der Ausführungsform gemäß den Fig. 3a und 3b mit nach radial innen weisenden Versteifungsrippen 37 versehen ist.

### Bezugszeichenliste:

- 1: Tauchkolben
- 2: Verstärkungsrippen
- 3: Fußbereich der Verstärkungsrippen
- 4: Vertiefungen
- 5: Fußbereich des Tauchkolbens
- 6: Tauchkolbenrand
- 7: Muldenabschnitt
- 8: Muldenboden
- 9: Tauchkolbenmantel
- 10: Bogen
- 11: Stützkörper
- 12: Fußbereich des Stützkörpers
- 13: Rastrippe
- 14: Rastaussparungen
- 15: Innenfläche
- 16: Außenfläche
- 17: Stahlplatte
- 18: Bodenplatte
- 19: Öffnung
- 20: Öffnung
- 21: Bogen
- 22: Bolzen
- 23: Boden
- 24: Luftfederbalg
- 25: Gummipuffer
- 26: Mulde
- 27: Innenraum
- 28: Unterseite
- 29: Einführungsschräge
- 30: Anschlagkante
- 31: Verstärkung
- 32: Unterseite
- 33: Stutzkörpermantel
- 34: Hinterschneidung
- 35: Oberseite
- 36: Hohlraum
- 37: Versteifungsrippen
- 38: Innenkontur
- 39: Verstärkungsrippen
- 40: Vertiefungen
- 41: Stützring
- D: Durchmesser
- F: Querschnittsfläche
- S: Senkrechte

## Patentansprüche

1. Tauchkolbenanordnung z.B. für die Abstützung und Führung eines Luftfederbalges (24) einer luftgefederten Nutzfahrzeugachse od. dgl., mit einem Tauchkolben (1), welcher einen Tauchkolbenmantel (9) mit einem unteren Fußbereich (5) z.B. für die Verbindung mit einem Luftfedertragarm und einem oberen, sich an den Tauchkolbenmantel (9) anschließenden Tauchkolbenrand (6) aufweist, welcher nach radial innen in einen mit einem mit einer Öffnung (20) für den Durchtritt eines Bolzens (22) zur kraftschlüssigen Verbindung mit einem Boden (23) des Luftfederbalges (24) versehenen Muldenboden (8) ausgestatteten Muldenabschnitt (7) übergeht, welcher eine Mulde (26) zur Aufnahme des konvexen Bodens (23) des Luftfederbalges (24) bildet, wobei in einem von dem Tauchkolbenmantel (9) umgebenen Innenraum (27) ein Stützkörper (11) angeordnet ist, welcher sich mit seinem unteren Fußbereich (12) an dem unteren Fußbereich (5) des Tauchkolbens (1) abstützt, dadurch gekennzeichnet, daß der Tauchkolben (1) und der Stützkörper (11) aus Kunststoff, vorzugsweise glasfaserverstärktem Kunststoff od. dgl. Verbundwerkstoffen, bestehen, daß der Tauchkolben (1) topfförmig mit im wesentlichen zylindrischem Mantel (9) ausgebildet ist, daß der Stützkörper (11) als gesondertes Teil von im wesentlichen hohlkegelstumpfförmiger Gestalt mit sich vom unteren Fußbereich (5) zum Muldenboden (8) des Tauchkolbens (1) verringerndem Durchmesser (D) ausgebildet ist und daß der Stützkörper (11) mit einer oberen Bodenplatte (18) an der Unterseite (28) des Muldenbodens (8) des Tauchkolbens (1) anliegt.

2. Tauchkolbenanordnung nach Anspruch 1, dadurch gekennzeichnet, daß der Stützkörper (11) im wesentlichen rotationssymmetrisch ausgebildet und koaxial zu dem Tauchkolben (1) angeordnet ist.

3. Tauchkolbenanordnung nach Anspruch 1 oder 2, dadurch gekennzeichnet, daß der Tauchkolben (1) über den Umfang des Tauchkolbenmantels (9) verteilte, nach radial innen vorstehende Verstärkungsrippen (2) aufweist, in welchen stirnseitig Vertiefungen (4) zur Aufnahme von Bolzen für die Verbindung mit dem Luftfederträger vorgesehen sind, und daß der Stützkörper (11) mit seinem Fußbereich (12) formschlüssig an den Fußbereich (3) der Verstärkungsrippen (2) anschließt.

4. Tauchkolbenanordnung nach einem der Ansprüche 1 bis 3, dadurch gekennzeichnet, daß der Stützkörper (11) mit einer an seinem unteren Fußbereich (12) vorgesehenen, vorzugsweise umlaufenden Rastrippe (13) zumindest in mehreren über den Umfang des Fußbereichs (5) des Tauchkolbenmantels (9) verteilten Rastaussparungen (14) nach Art eines Schnappverschlusses einrastbar ist.

5. Tauchkolbenanordnung nach Anspruch 3 oder 4, dadurch gekennzeichnet, daß die Rastaussparungen (14) im Fußbereich (3) der Verstärkungsrippen (2) vorgesehen sind.

6. Tauchkolbenanordnung nach Anspruch 4 oder 5, dadurch gekennzeichnet, daß die Rastaussparungen (14) von unten aus gesehen hinterschnitten sind und ggf. eine Einführungsschräge (29) aufweisen und ggf. eine obere Anschlagkante (30= für die vorzugsweise umlaufende Rastrippe (13) bildet.

7. Tauchkolbenanordnung nach einem der Ansprüche 1 bis 6, dadurch gekennzeichnet, daß die Bodenplatte (18) des Stützkörpers (11) koaxial zur Öffnung (20) im Muldenboden (8) des Tauchkolbens (1) für den Durchtritt des Bolzens (22) zur gemeinsamen kraftschlüssigen Verbindung mit dem Boden (23) des Luftfederbalges (24) eine Öffnung (19) aufweist.

8. Tauchkolbenanordnung nach einem der Ansprüche 1 bis 7, dadurch gekennzeichnet, daß die Bodenplatte (18) des Stützkörpers (11) eine mittlere, ggf. mit Radialrippen und umlaufendem Steg ausgebildete Verstärkung (31) aufweist.

9. Tauchkolbenanordnung nach einem der Ansprüche 1 bis 8, dadurch gekennzeichnet, daß die Oberseite (35) der Bodenplatte (18) sich mit einem die Öffnung (19) umgebenden ebenen Ringbereich an der jedenfalls in diesem Ringbereich ebenen Unterseite (28) des Muldenbodens (8) des Tauchkolbens (1) abstützt.

10. Tauchkolbenanordnung nach einem der Ansprüche 1 bis 9, dadurch gekennzeichnet, daß zwischen Unterseite (28) des Muldenbodens (8) und Oberseite (35) der Bodenplatte (18) ein die Öffnungen (19, 20) umgebender flacher Hohlraum (36) freigelassen ist, in dessen Bereich die Bodenplatte (18) unter der Wirkung des Bolzens (22) einfedernd ausgebildet ist.

11. Tauchkolbenanordnung nach einem der Ansprüche 1 bis 10, dadurch gekennzeichnet, daß die Unterseite (32) der Bodenplatte (18) des Stützkörpers (11) über einen Bogen (21) mit weitem Radius in die Innenfläche (15) des konisch verlaufenden Stützkörpermantels (33) übergeht.

12. Tauchkolbenanordnung nach einem der Ansprüche 1 bis 11, dadurch gekennzeichnet, daß die Querschnittsfläche (F) des Stützkörpermantels (33) in jeder Höhe des kegelstumpfförmigen Stützkörpers (11) gleich ist.

13. Tauchkolbenanordnung nach Anspruch 12, dadurch gekennzeichnet, daß die Innenfläche (15) des Stützkörpermantels (33) stärker gegenüber der Senkrechten (S) geneigt ist als die Außenfläche (16) des Stützkörpermantels (33).

14. Tauchkolbenanordnung nach einem der Ansprüche 1 bis 13, dadurch gekennzeichnet, daß der Tauchkolben (1) nach radial innen weisende Versteifungsrippen (37) aufweist, welche vorzugsweise über die gesamte Höhe des Tauchkolbenmantels (9) reichen und vorzugsweise mit ihrer Innenkontur (38) an die Kontur der Außenfläche (16) des Stützkörpermantels (33) angepaßt sind.

15. Tauchkolbenanordnung nach einem der Ansprüche 1 bis 14, dadurch gekennzeichnet, daß der Stützkörper (11) über den Umfang des Stützkörpermantels (33) verteilte, nach radial außen vorstehende Verstärkungsrippen (39) aufweist, in welchen stirnseitige Vertiefungen (40) zur Aufnahme von Bolzen für die Verbindung mit dem Luftfederträger vorgesehen sind, und daß der Tauchkolben (1) mit seinem Fußbereich (5) formschlüssig an den Fußbereich (41) der Verstärkungsrippen (39) anschließt.

16. Tauchkolbenanordnung nach einem der Ansprüche 1 bis 15, dadurch gekennzeichnet, daß die Bodenplatte (8) des Stützkörpers (11) konkav ausgebildet ist und sich mit einem mittleren, ihre Öffnung (19) unmittelbar umgebenden ebenen Ringbereich an der Unterseite (28) des Muldenbodens (8) des Tauchkolbens (1) abstützt.

## Claims

1. Plunger piston arrangement, for example for the support and guidance of an air spring bellows (24) of an air-suspended utility vehicle axle or the like, having a plunger piston (1) which has a plunger piston skirt (9) with a lower foot region (5), for example for the connection with an air spring bearing arm, and with an upper plunger piston edge (6) which is connected to the plunger piston skirt (9) and turns radially inwards into a trough section (7) with a trough base (8) which is provided with an opening (20) for the passage of a bolt (22) for the force-locking connection with a base (23) of the air spring bellows (24), and which trough section (7) forms a trough (26) for the accommodation of the convex base (23) of the air spring bellows (24), wherein arranged in an interior space (27) surrounded by the plunger piston skirt (9) there is a support body (11) which is supported with its lower foot region (12) at the lower foot region (5) of the plunger piston (1), characterised in that the plunger piston (1) and the support body (11) are made of plastics material, preferably glass fibre-reinforced plastics material or like composite materials, in that the plunger piston (1) is formed in a pot-shaped manner with a substantially cylindrical skirt (9), in that the support body (11) is formed as a separate part having substantially the shape of a hollow truncated cone with a diameter (D) which diminishes from the lower foot region (5) towards the trough base (8) of the plunger piston (1) and in that the support body (11) rests with an upper base plate (18) against the underside (28) of the trough base (8) of the plunger piston (1).

2. Plunger piston arrangement according to claim 1, characterised in that the support body (11) is formed in a substantially rotationally symmetrical manner and is arranged so as to be coaxial to the plunger piston (1).

3. Plunger piston arrangement according to claim 1 or 2, characterised in that the plunger piston (1) has reinforcing ribs (2) which are distributed over the periphery of the plunger piston skirt (9) and which project radially inwards and provided in which, on the face, are depressions (4) for the accommodation of bolts for the connection with the air spring carrier, and in that the foot region (12) of the support body (11) is connected in a form-locking manner to the foot region (3) of the reinforcing ribs (2).

4. Plunger piston arrangement according to one of the claims 1 to 3, characterised in that the support body (11) can be snapped into place in the nature of a snap lock with a stop rib (13), which is provided at its lower foot region (12) and is preferably circumferential, into at least several stop recesses (14) distributed over the periphery of the foot region (5) of the plunger piston skirt (9).

5. Plunger piston arrangement according to claim 3 or 4, characterised in that the stop recesses (14) are provided in the foot region (3) of the reinforcing ribs (2).

6. Plunger piston arrangement according to claim 4 or 5, characterised in that the stop recesses (14) are undercut, viewed from below, and, optionally, have a lead-in slope (29) and, optionally, form an upper stopping edge (30) for the preferably circumferential stop rib (13).

7. Plunger piston arrangement according to one of the claims 1 to 6, characterised in that the base plate (18) of the support body (11) has an opening (19) coaxial to the opening (20) in the trough base (8) of the plunger piston (1) for the passage of the bolt (22) for the common force-locking connection with the base (23) of the air spring bellows (24).

8. Plunger piston arrangement according to one of the claims 1 to 7, characterised in that the base plate (18) of the support body (11) has a central reinforcement (31) formed, optionally, with radial ribs and circumferential web.

9. Plunger piston arrangement according to one of the claims 1 to 8, characterised in that the upper side (35) of the base plate (18) is stayed with a planar annular region surrounding the opening (19) on the underside (28) of the trough base (8) of the plunger piston (1), which underside (28) is planar in any case in this annular region.

10. Plunger piston arrangement according to one of the claims 1 to 9, characterised in that left free between an underside (28) of the trough base (8) and an upper side (35) of the base plate (18) there is a shallow hollow space (36) which surrounds the openings (19, 20) and in the region of which the base plate (18) is formed in a manner such that it undergoes spring deflection under the effect of the bolt (22).

11. Plunger piston arrangement according to one of the claims 1 to 10, characterised in that the underside (32) of the base plate (18) of the support body (11) turns by way of an arc (21) with a wide radius into the inner surface (15) of the conically extending support body shell (33).

12. Plunger piston arrangement according to one of the claims 1 to 11, characterised in that the cross-sectional area (F) of the support body shell (33) is equal at every height of the truncated cone-shaped support body (11).

13. Plunger piston arrangement according to claim 12, characterised in that the inner surface (15) of the support body shell (33) is inclined to a greater extent relative to the perpendicular (S) than the outer surface (16) of the support body shell (33).

14. Plunger piston arrangement according to one of the claims 1 to 13, characterised in that the plunger piston (1) has reinforcing ribs (37) which point radially inwards, reach preferably over the whole height of the plunger piston skirt (9) and are adapted preferably with their inner contour (38) to the contour of the outer surface (16) of the support body shell (33).

15. Plunger piston arrangement according to one of the claims 1 to 14, characterised in that the support body (11) has reinforcing ribs (39) which are distributed over the periphery of the support body shell (33) and which project radially outwards and provided in which on the face are depressions (40) for the accommodation of bolts for the connection with the air spring carrier and in that the foot region (5) of the plunger piston (1) is connected in a form-locking manner to the foot region (41) of the reinforcing ribs (39).

16. Plunger piston arrangement according to one of the claims 1 to 15, characterised in that the base plate (8) of the support body (11) is formed in a concave manner and is stayed with a central planar annular region, which directly surrounds its opening (19), on the underside (28) of the trough base (8) of the plunger piston (1).

## Revendications

1. Système de piston plongeur par exemple pour supporter et guider un soufflet de ressort pneumatique (24) d'un essieu de véhicule utilitaire ou analogue à suspension pneumatique, comportant un piston plongeur (1) qui présente une jupe de piston (9) avec une zone de pied (5) inférieure, par exemple pour la liaison avec un bras support, et un bord de piston (6) supérieur qui fait suite à la jupe de piston (9) et, radialement vers l'intérieur, se raccorde à une partie en cuvette (7) comportant un fond (8) pourvu d'une ouverture (20) pour le passage d'un corps de boulon (22) à des fins de fixation par adhérence avec un fond (23) du soufflet (24) de ressort pneumatique, laquelle partie en cuvette forme une cuvette (26) destinée à recevoir le fond (23) convexe du soufflet (24) de ressort pneumatique, un élément d'appui (11) étant disposé dans une chambre intérieure (27) entourée par la jupe (9) du piston plongeur, lequel élément d'appui prend appui par sa zone de pied (12) inférieure sur la zone de pied (5) inférieure du piston plongeur (1), caractérisé par le fait que le piston plongeur (1) et l'élément d'appui (11) sont en matière plastique, de préférence en matière plastique renforcée par fibres de verte ou en matériau composite analogue, par le fait que le piston plongeur (1) a une forme de pot avec une jupe (9) sensiblement cylindrique, par le fait que l'élément d'appui (11) est agencé sous forme d'élément séparé, sensiblement en forme de tronc de cône creux, dont le diamètre (D) décroît de la zone de pied (5) inférieure en direction du fond (8) du piston et par le fait que l'élément d'appui (11) est appliqué par une plaque de fond (18) supérieure contre la face inférieure (28) du fond (8) du piston plongeur (1).

2. Système de piston plongeur selon la revendication 1, caractérisé par le fait que l'élément d'appui (11) est sensiblement symétrique de rotation et est disposé coaxialement avec le piston plongeur (1).

3. Système de piston plongeur selon la revendication 1 ou 2 caractérisé par le fait que le piston plongeur (1) présente, réparties sur le pourtour de la jupe de piston (9), des nervures de renfort (2) qui font saillie radialement vers l'intérieur, dans lesquelles il est prévu côté face frontale des cavités (4) destinées à recevoir des corps de boulons pour la liaison avec le support de ressort pneumatique et par le fait que l'élément d'appui (11) se raccorde par sa zone de pied (12), par complémentarité de forme, à la zone de pied (3) des nervures de renfort (2).

4. Système de piston plongeur selon l'une des revendications 1 à 3, caractérisé par le fait que l'élément d'appui (11), par un bord d'encliquetage (13) de préférence circulaire prévu dans sa zone de pied (12) inférieure peut être encliqueté, à la manière d'un système de verrouillage à encliquetage, dans plusieurs évidements d'encliquetage (14) répartis sur le pourtour de la zone de pied (5) de la jupe de piston (9).

5. Système de piston plongeur selon la revendication 3 ou 4, caractérisé par le fait que les évidements d'encliquetage (14) sont prévus dans la zone de pied (3) des nervures de renfort (2).

6. Système de piston plongeur selon la revendication 4 ou 5, caractérisé par le fait que les évidements d'encliquetage (14) vus de dessous sont agencés en contre-dépouille et présentent le cas échéant un chanfrein d'entrée (29) et éventuellement un rebord de butée (30) supérieur pour le bord d'encliquetage de préférence circulaire.

7. Système de piston plongeur selon l'une des revendications 1 à 6, caractérisé par le fait que la plaque de fond (18) de l'élément d'appui (11) présente, coaxialement à l'ouverture (20) dans le fond (8) du piston plongeur (1) pour le passage du corps de boulon (22), une ouverture (19) pour la liaison par adhérence avec le fond (23) du soufflet de ressort pneumatique (24).

8. Système de piston plongeur selon l'une des revendications 1 à 7, caractérisé par le fait que la plaque de fond (18) de l'élément d'appui (11) présente un renfort (31) médian comportant le cas échéant de nervures radiales et un rebord circulaire.

9. Système de piston plongeur selon l'une des revendications 1 à 8, caractérisé par le fait que la face supérieure (35) de la plaque de fond (18), par une surface annulaire plane entourant l'ouverture (19), prend appui sur la face inférieure (28) du fond (8) du piston plongeur (1) qui dans cette région annulaire au moins est plane.

10. Système de piston plongeur selon l'une des revendications 1 à 9, caractérisé par le fait qu'une chambre (36) aplatie, dans la région de laquelle la plaque de fond (18) est agencée de manière à pouvoir fléchir sous l'action du corps de boulon (22), est ménagée entre la face inférieure (28) du fond (8) et la face supérieure de la plaque de fond (18).

11. Système de piston plongeur selon l'une des revendications 1 à 10, caractérisé par le fait que la face inférieure (32) de la plaque de fond (18) de l'élément d'appui (11) se raccorde par l'intermédiaire d'une arc (21) à grand rayon à la surface intérieure (15) de l'enveloppe (33) conique de l'élément d'appui.

12. Système de piston plongeur selon l'une des revendications 1 à 11, caractérisé par le fait que la surface en section (F) de l'enveloppe (33) de l'élément d'appui est la même en tout point de la hauteur de l'élément d'appui (11) tronconique.

13. Système de piston plongeur selon la revendication 12, caractérisé par le fait que la surface intérieure (15) de l'enveloppe (33) de l'élément d'appui présente une inclinaison par rapport à la verticale (S) qui est plus forte que celle de la surface extérieure (16) de l'enveloppe (33) de l'élément d'appui.

14. Système de piston plongeur selon l'une des revendications 1 à 13, caractérisé par le fait que le piston plongeur (1) présente des nervures de rigidification (37) orientées radialement vers l'intérieur qui, de préférence, s étendent sur l'ensemble de la hauteur de la jupe de piston (9) et de préférence, par leur forme intérieure (38), sont adaptées à la forme de la surface extérieure (16) de l'enveloppe (33) de l'élément d'appui.

15. Système de piston plongeur selon l'une des revendications 1 à 14, caractérisé par le fait que l'élément d'appui (11) présente des nervures de renfort (39) qui sont réparties sur le pourtour de l'enveloppe (33) de l'élément d'appui et font saillie radialement vers l'extérieur, saillies dans lesquelles il est prévu côté frontal des cavités (40) destinées à recevoir des corps de boulons pour la liaison avec le support de ressort pneumatique, et par le fait que le piston plongeur (1), par sa zone de pied (5), se raccorde par complémentarité de forme à la zone de pied (41) des nervures de renfort (39).

16. Système de piston plongeur selon l'une des revendications 1 à 15, caractérisé par le fait que la plaque de fond (18) de l'élément d'appui (11) a une forme concave et, par une zone annulaire médiane plane qui entoure directement son ouverture (19), prend appui sur la face inférieure (28) du fond (8) du piston plongeur (1).
